# EUROPEAN PATENT APPLICATION

(11) **EP 4 714 608 A1**
(43) Date of publication of application: **25.03.2026**
(21) Application number: 23937465.5
(22) Date of filing: 16.05.2023
(51) Int. Cl.: B25F 5/00, B23D 17/06

(54) **HYDRAULIC ACTUATION DEVICE**

(71) Applicant: Ogura & Co., Ltd., Ebina-shi, Kanagawa 243-0417 (JP)
(72) Inventor: KIMURA Kiyoshi, Ebina-shi, Kanagawa 243-0417 (JP)
(74) Representative: Ter Meer Steinmeister & Partner
(86) International application number: PCT/JP2023/018228
(87) International publication number: WO 2024/236723

(57) **Abstract**

This hydraulic actuation device (e.g., cutting device 10) includes: a hydraulic pump configured to generate pressure oil; a tool (specifically, a cutting portion 50) configured to be actuated by the pressure oil generated by the hydraulic pump; an oil passage through which the pressure oil generated by the hydraulic pump is sent to the tool and return oil is returned from the tool to the hydraulic pump; and a switchover portion (specifically, an operation handle 70, a handle support portion 72, and a phase adjustment member 76) provided to the oil passage and configured to switch a path for at least one of the pressure oil and the return oil. The switchover portion includes an actuation part (specifically, the handle support portion 72), and a first shaft part (specifically, a first pushing portion 78a) and a second shaft part (specifically, a second pushing portion 78b) configured to advance/recede when the actuation part is rotated. When the actuation part is rotated, the first shaft part and the second shaft part alternately advance/recede in a direction perpendicular to a direction in which the actuation part is rotated, whereby the path in the oil passage is switched.

## Description

### TECHNICAL FIELD

The present disclosure relates to a hydraulic actuation device.

### BACKGROUND ART

Conventionally, a portable hydraulic actuation device has been used for the purpose of rescue, and one example thereof is described in Patent Literature 1 and the like. A hydraulic actuation device disclosed in Patent Literature 1 includes a hydraulic pressure generating unit having a battery, an electric motor supplied with power from the battery, and a hydraulic pump driven by the electric motor, and a head unit attachable and detachable to and from the hydraulic pressure generating unit and having a tip tool driven by pressure oil generated by the hydraulic pressure generating unit. As the tip tool to be provided to the head unit, various types of tools such as a cutter and a spreader are prepared, and it is possible to adapt to a wide variety of works by replacing the head unit. In addition, since the hydraulic pressure generating unit and the head unit can be separated from each other, portability is improved, so that a load on a worker on the site can be reduced.

Here, in such a conventional hydraulic actuation device, when pressure oil generated by a hydraulic pump is sent to a tip tool or return oil is returned from the tip tool to the hydraulic pump, a path for pressure oil or return oil in an oil passage is switched by a spool valve (see, for example, Patent Literature 2). Specifically, in a conventional hydraulic actuation device as disclosed in Patent Literature 2, a spool valve is provided so as to be slidable in a direction perpendicular to a piston rod. In addition, a columnar grip handle grasped by a hand of a worker is attached to the outer side of a casing in parallel to the piston rod. Here, the grip handle is rotatable around the axis of the grip handle. In addition, a plurality of cam mechanisms are provided between the spool valve and the grip handle. Then, when a worker rotates the grip handle, the rotational motion of the grip handle is converted to an advancing/receding motion of the spool valve via the cam mechanisms, so that the spool valve moves up/down relative to the piston rod, whereby the flow direction of pressure oil or the like is controlled.

A hydraulic actuation device as disclosed in Patent Literature 3 is configured to allow a hand or a finger of a worker grasping a handle to operate an operation portion without taking the hand off the handle or a grip portion.

### CITATION LIST/PATENT LITERATURE

Patent Literature 1: Japanese Laid-Open Patent Publication No. 2010-280011
Patent Literature 2: Japanese Laid-Open Patent Publication No. 2004-17202
Patent Literature 3: Japanese Laid-Open Patent Publication No. 2021-20293

### SUMMARY OF THE INVENTION/PROBLEM TO BE SOLVED BY THE INVENTION

In the spool valve of the conventional hydraulic actuation device as disclosed in Patent Literatures 2 and 3, the handle is provided so as to extend in a direction perpendicular to the advancing/receding direction of one spool valve, and the handle is rotatable around the axis. Therefore, the placement space for the handle is large and the size of the hydraulic actuation device is increased, thus causing a problem that the mass and the cost of the hydraulic actuation device are increased.

The present disclosure has been made in view of the above circumstances, and an object of the present disclosure is to provide a hydraulic actuation device in which a mechanism for switching a path for pressure oil or return oil in an oil passage is not complicated and a set of valves can be easily switched merely by rotating a change lever leftward or rightward, thus having a simple structure and a reduced size at low cost.

A hydraulic actuation device according to the present disclosure includes: a hydraulic pump configured to generate pressure oil; a tool configured to be actuated by the pressure oil generated by the hydraulic pump; an oil passage through which the pressure oil generated by the hydraulic pump is sent to the tool and return oil is returned from the tool to the hydraulic pump; and a switchover portion provided to the oil passage and configured to switch a path for at least one of the pressure oil and the return oil. The switchover portion includes an actuation part, and a first shaft part and a second shaft part configured to advance/recede when the actuation part is rotated. When the actuation part is rotated, the first shaft part and the second shaft part alternately advance/recede in a direction perpendicular to a direction in which the actuation part is rotated, whereby the path in the oil passage is switched.

In the hydraulic actuation device according to the present disclosure, the switchover portion may include a conversion member configured to convert a rotational motion of the actuation part to advancing/receding motions of the first shaft part and the second shaft part.

In the hydraulic actuation device according to the present disclosure, the actuation part, the conversion member, and a phase adjustment member may be configured to rotate in the same phase, outer circumferential surfaces of the first shaft part and the second shaft part may have grooves each extending in a direction inclined relative to an advancing/receding direction and a circumferential direction of the first shaft part and the second shaft part, and fixation members provided in a position fixed state may be respectively inserted into the grooves.

In the hydraulic actuation device according to the present disclosure, the first shaft part and the second shaft part of the switchover portion may be provided with seal members extending along the circumferential direction of the first shaft part and the second shaft part, and when the first shaft part and the second shaft part advance/recede by the actuation part being rotated, positions of the seal members may be changed, whereby the path in the oil passage may be switched.

In the hydraulic actuation device according to the present disclosure, a body part of the hydraulic actuation device may have an insertion hole into which a shaft part of the switchover portion is inserted, an oil passage extending along a circumferential direction of the insertion hole may be provided to a peripheral wall of the insertion hole, and when the shaft part advances/recedes by the actuation part being rotated, the oil passage closed by the shaft part may be opened or the oil passage may be closed by the shaft part, whereby the path in the oil passage may be switched.

### BRIEF DESCRIPTION OF THE DRAWINGS

FIG. 1 is a front view showing a cutting device of an embodiment of the disclosure.
FIG. 2 is a side sectional view showing an internal structure of the cutting device shown in FIG. 1, as seen from a lateral side.
FIG. 3 is an enlarged side sectional view showing a part of the internal structure of the cutting device shown in FIG. 2.
FIG. 4 is a side sectional view showing an internal structure of an operation handle of the cutting device shown in FIG. 1.
FIG. 5A is an exploded perspective view showing structures of a handle support portion and reciprocating members in the cutting device shown in FIG. 1.
FIG. 5B is a front view showing the structure of the reciprocating members in the cutting device shown in FIG. 1.
FIG. 6 shows an internal structure of a pressure oil supply mechanism when the operation handle is at an advancing position in the cutting device shown in FIG. 1.
FIG. 7 shows the internal structure of the pressure oil supply mechanism when the operation handle is at a neutral position in the cutting device shown in FIG. 1.
FIG. 8 shows the internal structure of the pressure oil supply mechanism when the operation handle is at a receding position in the cutting device shown in FIG. 1.
FIG. 9 is an exploded perspective view of a passage adjustment valve in the pressure oil supply mechanism of the cutting device shown in FIG. 1.
FIG. 10 is a structural view showing a state in which a through hole of a second seal plate is not sealed by a seal pin in the pressure oil supply mechanism of the cutting device shown in FIG. 1.
FIG. 11 is a structural view showing a state in which the through hole of the second seal plate is sealed by the seal pin in the pressure oil supply mechanism of the cutting device shown in FIG. 1.

### DESCRIPTION OF THE PREFERRED EMBODIMENTS

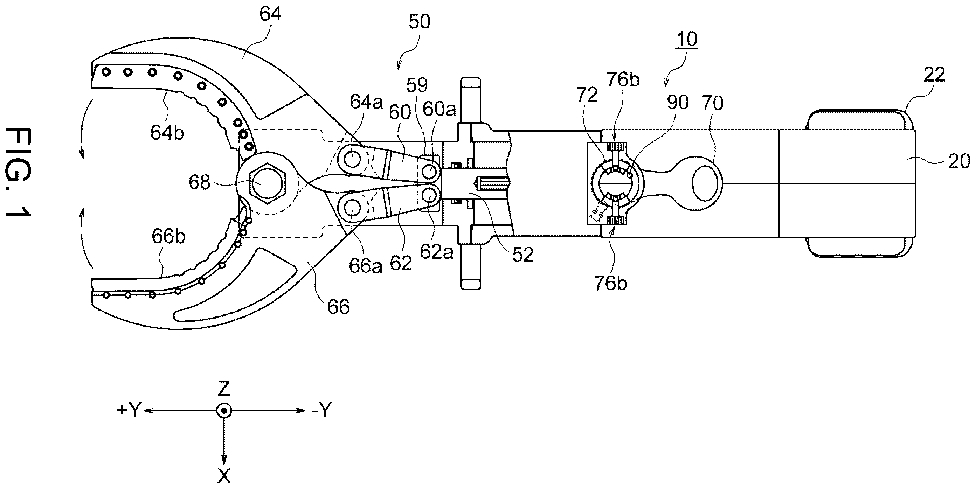

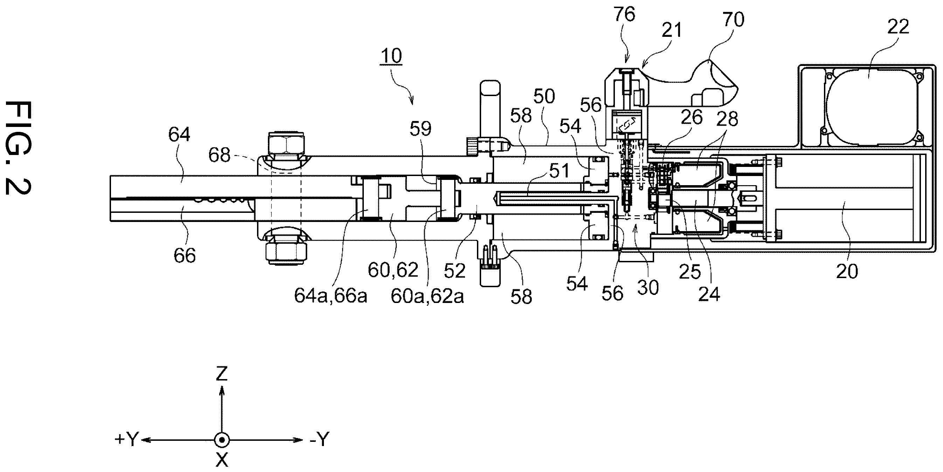

Hereinafter, an embodiment of the present disclosure will be described with reference to the drawings. A cutting device 10 (hydraulic actuation device) according to the present embodiment is used for a purpose such as rescue, and can cut a round bar such as a reinforcement bar by a cutting portion. FIG. 1 to FIG. 11 show the cutting device 10 according to the present embodiment. In FIG. 2 to FIG. 8, in order to make it easy to view oil passages for pressure oil and return oil, passage adjustment valves, and the like, hatching for indicating cross-sections at parts around the oil passages, the passage adjustment valves, and the like is omitted. For facilitating the understanding, an XYZ orthogonal coordinate system is set such that the length direction of the cutting device 10 (hydraulic actuation device) according to the present embodiment is a Y-axis direction, a length direction of a protrusion part 76b disposed at the cutting device 10 (hydraulic actuation device) is an X-axis direction, and a direction orthogonal to the Y-axis direction and the X-axis direction is a Z-axis direction, and description will be given with reference to these directions.

As shown in FIG. 1, etc., the cutting device 10 according to the present embodiment includes a motor 20 such as an electric motor, a battery 22 composed of a secondary battery such as a lithium-ion battery or a nickel-hydrogen battery, a cutting portion 50 for cutting a round bar such as a reinforcement bar, and an actuation portion 21 for actuating the cutting portion 50. More specifically, the cutting portion 50 has a pair of cutting members 64 and 66, and the cutting members 64 and 66 are each rotatable about a shaft 68. By rotating the cutting members 64 and 66 about the shaft 68 in directions to come close to each other, a round bar such as a reinforcement bar present between the pair of cutting members 64 and 66 is cut.

An operation handle 70 is attached to the actuation portion 21. By operating the operation handle 70, a worker can adjust the rotation directions of the cutting members 64 and 66 about the shaft 68. In the present embodiment, the operation handle 70 has a bar shape, and by a worker holding the operation handle 70 by a hand and rotating the operation handle 70 in the forward direction or the backward direction from the initial position (e.g., 30 degrees in the forward direction or 30 degrees in the backward direction), the cutting members 64 and 66 rotate about the shaft 68 in directions to come close to each other or directions to be separated from each other. In the present embodiment, when a worker takes a hand off the operation handle 70, the operation handle 70 returns to the initial position. When the operation handle 70 has returned to the initial position, the cutting members 64 and 66 are stopped. The details of such operations will be described later.

As shown in FIG. 2, a rotary shaft 24 is attached to the motor 20, and power is supplied from the battery 22 to the motor 20, whereby the rotary shaft 24 attached to the motor 20 is rotated. An eccentric member 25 is attached to a distal end of the rotary shaft 24. The eccentric member 25 is eccentric with respect to the axis of the rotary shaft 24, and a bearing such as a needle roller bearing is attached to the outer circumferential surface of the eccentric member 25.

The actuation portion 21 includes a piston 26 provided in the vicinity of the eccentric member 25, an oil chamber 28, and a pressure oil supply mechanism 30 configured to send pressure oil from the oil chamber 28 to the cutting portion 50 and return pressure oil from the cutting portion 50 to the oil chamber 28. The piston 26 moves up and down by the eccentric member 25 rotating. The piston 26 is always pressed to the outer circumferential surface of the bearing by a spring (not shown). Therefore, when the rotary shaft 24 is rotated by the motor 20, the eccentric member 25 and the bearing perform eccentric rotational motions with respect to the axis of the rotary shaft 24, so that the piston 26 moves up and down, pressure oil is sent from the oil chamber 28 to the pressure oil supply mechanism 30, and pressure oil is supplied from the pressure oil supply mechanism 30 to the cutting portion 50, whereby the cutting portion 50 is actuated.

The structure of the cutting portion 50 will be described with reference to FIG. 1 and FIG. 2. The cutting portion 50 includes the pair of cutting members 64 and 66 which are each rotatable about the shaft 68, a base member 59, and a piston member 52 with the base member 59 attached to a distal end thereof. A cutting edge 64b for cutting a round bar is provided at a part of the cutting member 64 that is opposed to the cutting member 66. A cutting edge 66b for cutting a round bar is provided also at a part of the cutting member 66 that is opposed to the cutting member 64. The cutting member 64 and the base member 59 are connected by a connection member 60. More specifically, the cutting member 64 is connected to the connection member 60 so as to be rotatable relative to the connection member 60 about a shaft 64a provided at a base end part of the cutting member 64. The connection member 60 is connected to the base member 59 so as to be rotatable relative to the base member 59 about a shaft 60a provided at a base end part of the connection member 60. The cutting member 66 and the base member 59 are connected by a connection member 62. More specifically, the cutting member 66 is connected to the connection member 62 so as to be rotatable relative to the connection member 62 about a shaft 66a provided at a base end part of the cutting member 66. The connection member 62 is connected to the base member 59 so as to be rotatable with respect to the base member 59 about a shaft 62a provided at a base end part of the connection member 62.

In the cutting device 10, when pressure oil is sent from the oil chamber 28 to an advancing oil chamber (described later) of the cutting portion 50 by the pressure oil supply mechanism 30, the piston member 52 is pushed out to the left side in FIG. 1 and FIG. 2. When the piston member 52 is pushed out to the left side in FIG. 1 and FIG. 2, the base member 59 also moves leftward in FIG. 1 and FIG. 2. Thus, the cutting members 64 and 66 are pushed and moved by the connection members 60 and 62 rotatably connected to a distal end part of the base member 59. Specifically, the cutting members 64 and 66 rotate about the shaft 68 in arrow directions in FIG. 1. In this way, the cutting members 64 and 66 rotate about the shaft 68 in directions to come close to each other, whereby a round bar such as a reinforcement bar clamped between the cutting members 64 and 66 is cut. On the other hand, after the round bar such as a reinforcement bar clamped between the cutting members 64 and 66 is cut, when the base member 59 moves rightward in FIG. 1 and FIG. 2, the base end parts of the cutting members 64 and 66 are pulled by the connection members 60 and 62 rotatably connected to the distal end part of the base member 59, so that the cutting members 64 and 66 rotate about the shaft 68 in directions to be separated from each other (i.e., directions opposite to arrow directions shown in FIG. 1).

In the present embodiment, as described above, the actuation portion 21 for actuating the cutting portion 50 includes the pressure oil supply mechanism 30 which sends pressure oil from the oil chamber 28 to the cutting portion 50 and returns pressure oil from the cutting portion 50 to the oil chamber 28. The operation handle 70 is provided to the actuation portion 21, and a worker can adjust a passage for pressure oil or return oil in the pressure oil supply mechanism 30 by operating the operation handle 70. Thus, a worker can adjust the rotation directions of the cutting members 64 and 66 about the shaft 68 by operating the operation handle 70. In the present embodiment, when a worker takes a hand off the operation handle 70, the operation handle 70 returns to the initial position, and in this case, the cutting members 64 and 66 are stopped. The details of structures of the pressure oil supply mechanism 30, the operation handle 70, and two passage adjustment valves 80 provided to the pressure oil supply mechanism 30 will be described below.

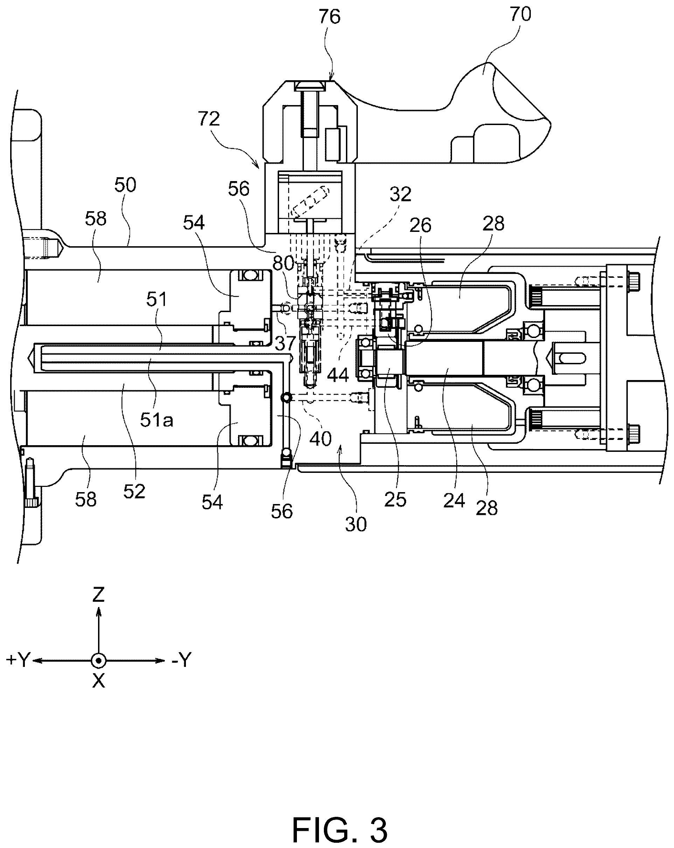

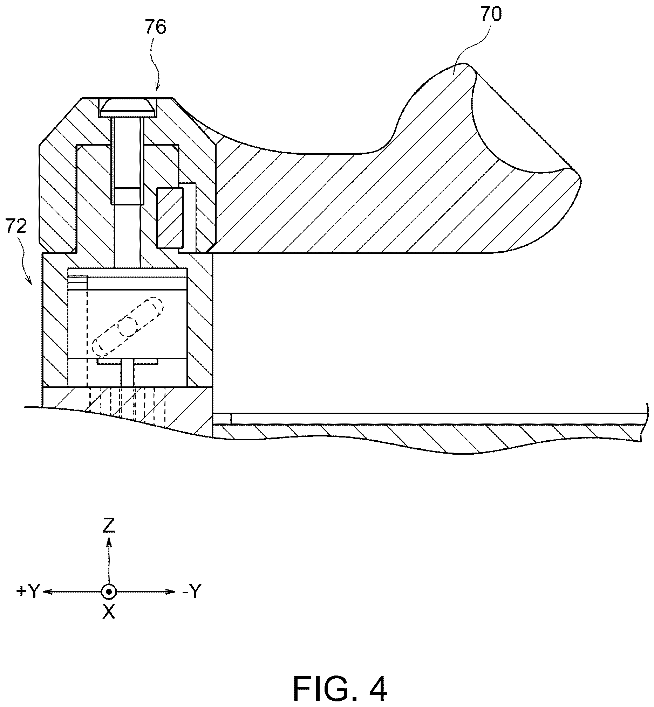

First, the structure of the operation handle 70 will be described with reference to FIG. 3 and FIG. 4. A worker can rotate the operation handle 70 in each of the forward direction and the backward direction from the initial position by holding the operation handle 70 by a hand. The operation handle 70 is supported by a handle support portion 72 (actuation part) attached to the actuation portion 21.

The operation handle 70 is rotatable relative to the handle support portion 72. The rotation angle of the operation handle 70 from the initial position is limited to angles in a predetermined range. After the operation handle 70 is rotated from the initial position, when a worker takes a hand off the operation handle 70, the operation handle 70 is returned to the initial position.

As shown in FIG. 4, a phase adjustment member 76 is attached to the operation handle 70. Here, the axis of a rotation shaft of the operation handle 70 is the same as the axis of the phase adjustment member 76. Therefore, when a worker holds the operation handle 70 by a hand and rotates the operation handle 70 from the initial position, the phase adjustment member 76 also rotates synchronously. A base part 76a is provided inside the operation handle 70, and when the operation handle 70 rotates, the base part 76a also rotates integrally.

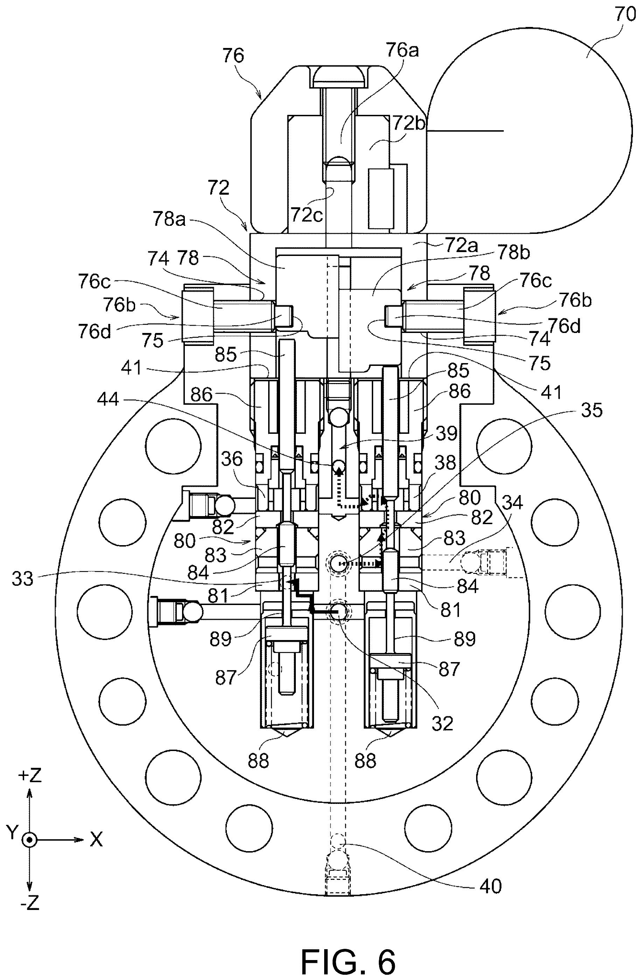

As shown in FIG. 6 to FIG. 8, a pair of a first pushing portion 78a and a second pushing portion 78b at the left and the right which form reciprocating members 78 are provided inside the handle support portion 72, and the base part 76a of the phase adjustment member 76 is connected to the reciprocating members 78. A pair of left and right protrusion parts 76b described later are connected to the handle support portion 72.

The handle support portion 72 is a member having such a shape that a columnar member 72a and a tubular member 72b are connected to each other at their flat surfaces. The columnar member 72a part has a larger diameter than the tubular member 72b part. An end surface of the columnar member 72a on a side not connected to the tubular member 72b has a recess in which the reciprocating members 78 can be accommodated. The diameter of the recess formed in the columnar member 72a of the handle support portion 72 is designed to be larger than the diameter of the tubular member 72b.

A through hole 72c formed in the tubular member 72b extends to the columnar member 72a, and the center axes of the columnar member 72a part and the tubular member 72b part coincide with each other. The diameter of the through hole 72c is designed to be slightly larger than the diameter of the base part 76a. The base part 76a is inserted into the handle support portion 72 from the tubular member 72b side.

The columnar member 72a of the handle support portion 72 has two stopper slits 74 extending along the circumferential direction of the columnar member 72a and having an oval shape and the same thickness. The two stopper slits 74 are formed at center parts of the handle support portion 72 so as to be 180-degree rotationally symmetric in the handle support portion 72. In the circumferential surface of the handle support portion 72, each stopper slit 74 is formed to have a length that is equal to or close to 1/4 of the shortest straight length on the circumferential surface of the handle support portion 72. The two protrusion parts 76b (fixation members) are inserted into the stopper slits 74. Therefore, the rotation angles of the operation handle 70 and the reciprocating members 78 are limited in a predetermined range. For example, the rotation angles of the operation handle 70 and the reciprocating members 78 are limited to 45 degrees or in a range therearound.

The reciprocating members 78 are formed by the first pushing portion 78a on the left side and the second pushing portion 78b on the right side. The first pushing portion 78a and the second pushing portion 78b are semi-columnar members. The first pushing portion 78a and the second pushing portion 78b are brought into contact with each other at their flat surfaces opposite to the semi-circumferential surfaces of the first pushing portion 78a and the second pushing portion 78b, whereby the reciprocating members 78 are formed.

The outer circumferential surfaces of the first pushing portion 78a and the second pushing portion 78b have lead grooves 75 having the same thickness and an oval shape and extending in directions inclined relative to the advancing/receding direction and the circumferential direction of the semi-circumferential surfaces of the first pushing portion 78a and the second pushing portion 78b.

The lead grooves 75 are formed at center parts of the circumferential surfaces of the first pushing portion 78a and the second pushing portion 78b, or in the vicinities of the center parts (specifically, slightly on the -Z direction side from the center parts of the first pushing portion 78a and the second pushing portion 78b), and are formed to be plane symmetric with respect to flat surfaces opposite to the semi-circumferential surfaces of the first pushing portion 78a and the second pushing portion 78b. The thickness of the lead groove 75 is slightly smaller than the thickness of the stopper slit 74. In the present embodiment, ends on the near side (plus side in Y-axis direction) of the stopper slit 74 and the lead groove 75 on the left side in FIG. 6 to FIG. 8 are defined as first left-side ends, and ends on the far side (minus side in Y-axis direction) of the stopper slit 74 and the lead groove 75 are defined as second left-side ends, for convenience sake. In addition, ends on the near side (plus side in Y-axis direction) of the stopper slit 74 and the lead groove 75 on the right side are defined as third right-side ends, and ends on the far side (minus side in Y-axis direction) of the stopper slit 74 and the lead groove 75 are defined as fourth right-side ends, for convenience sake. As described above, the lead grooves 75 are each formed to extend in a direction inclined relative to the advancing/receding direction and the circumferential direction of the semi-circumferential surfaces of the first pushing portion 78a and the second pushing portion 78b. Therefore, in FIG. 6 to FIG. 8, the lead grooves 75 are formed to rise from the near side (plus side in Y-axis direction) toward the far side (minus side in Y-axis direction) in the first pushing portion 78a and the second pushing portion 78b.

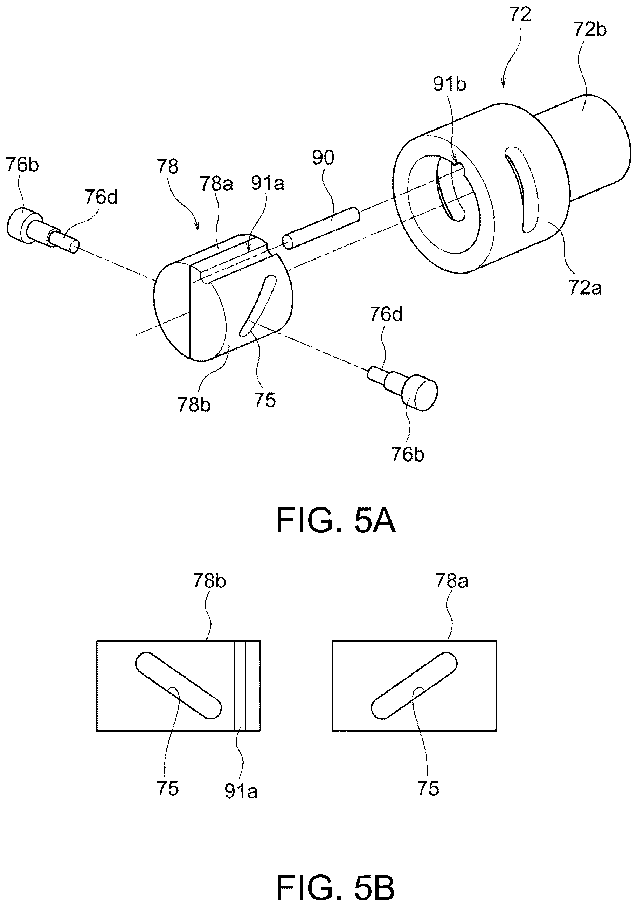

As shown in FIG. 5A and FIG. 5B, the outer circumferential surface of the first pushing portion 78a or the second pushing portion 78b has a groove 91a to which a positioning pin 90 having a thin and long columnar shape is fitted. In addition, the inner circumferential surface of the columnar member 72a of the handle support portion 72 has a groove 91b to which the positioning pin 90 is fitted. The positioning pin 90 can prevent the positions in the circumferential direction of the first pushing portion 78a and the second pushing portion 78b from being shifted from the handle support portion 72. In other words, the handle support portion 72 and the reciprocating members 78 can be used as one assembly member, and the handle support portion 72 and the reciprocating members 78 can be rotated at the same time and in the same direction.

In a state in which the first pushing portion 78a and the second pushing portion 78b are accommodated in the handle support portion 72, as shown in FIG. 6, when an advancing position is indicated, a trunk portion 76c of the protrusion part 76b on the left side is located at the first left-side end which is the end on the near side (plus side in Y-axis direction) of the stopper slit 74 on the left side. At this time, a distal end part 76d of the protrusion part 76b on the left side is also located at the first left-side end which is the end on the near side (plus side in Y-axis direction) of the stopper slit 74 on the left side. At the same time, a trunk portion 76c of the protrusion part 76b on the right side is located at the fourth right-side end which is the end on the far side (minus side in Y-axis direction) of the stopper slit 74 on the right side. At this time, a distal end part 76d of the protrusion part 76b on the right side is also located at the fourth right-side end which is the end on the far side (minus side in Y-axis direction) of the stopper slit 74 on the right side.

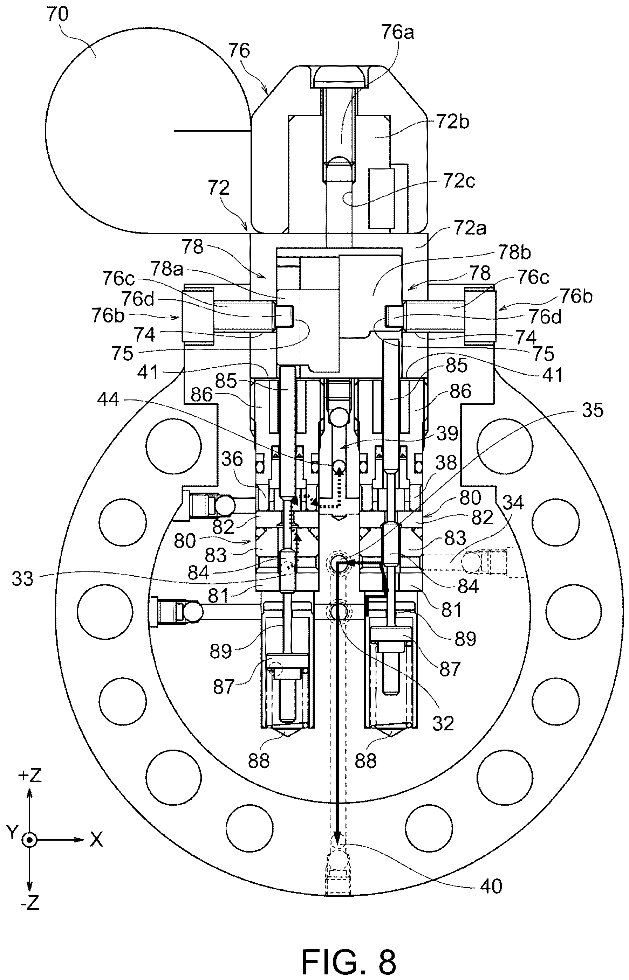

**In** a state in which the first pushing portion 78a and the second pushing portion 78b are accommodated in the handle support portion 72, as shown in FIG. 8, when a receding position is indicated, the trunk portion 76c of the protrusion part 76b on the left side is located at the second left-side end which is the end on the far side (minus side in Y-axis direction) of the stopper slit 74 on the left side. At this time, the distal end part 76d of the protrusion part 76b on the left side is also located at the second left-side end which is the end on the far side (minus side in Y-axis direction) of the stopper slit 74 on the left side. At the same time, the trunk portion 76c of the protrusion part 76b on the right side is located at the third right-side end which is the end on the near side (plus side in Y-axis direction) of the stopper slit 74 on the right side. At this time, the distal end part 76d of the protrusion part 76b on the right side is also located at the third right-side end which is the end on the near side (plus side in Y-axis direction) of the stopper slit 74 on the right side.

Each protrusion part 76b is a member provided to the handle support portion 72 with the position of the protrusion part 76b fixed. The protrusion part 76b is a bolt-shaped member, and the diameter of the distal end part 76d of the protrusion part 76b is slightly shorter than the thickness of the lead groove 75. Therefore, the distal end part 76d of the protrusion part 76b can be inserted into the lead groove 75. In addition, when the distal end part 76d of the protrusion part 76b is accommodated in the lead groove 75, the distal end part 76d of the protrusion part 76b can be restricted from moving in the thickness direction of the lead groove 75.

The diameter of the trunk portion 76c of the protrusion part 76b is slightly shorter than the thickness of the stopper slit 74. Therefore, the trunk portion 76c of the protrusion part 76b described later can be inserted into the stopper slit 74. In addition, when the trunk portion 76c of the protrusion part 76b is accommodated in the stopper slit 74, the trunk portion 76c of the protrusion part 76b can be restricted from moving in the thickness direction of the stopper slit 74.

As described above, the trunk portion 76c and the distal end part 76d of the protrusion part 76b, when accommodated in the stopper slit 74 and the lead groove 75, are restricted from moving in the thickness directions of the stopper slit 74 and the lead groove 75. Therefore, the protrusion part 76b is connected perpendicularly to the center axis of the handle support portion 72.

The distal end parts 76d of the two protrusion parts 76b are respectively inserted into the lead grooves 75 of the first pushing portion 78a and the second pushing portion 78b. Therefore, when the phase adjustment member 76 rotates, the first pushing portion 78a and the second pushing portion 78b also rotate, and the distal end parts 76d of the protrusion parts 76b inserted into the lead grooves 75 guide rotation of the first pushing portion 78a and the second pushing portion 78b.

In a state in which the two protrusion parts 76b are inserted into the lead grooves 75 of the first pushing portion 78a and the second pushing portion 78b and the stopper slits 74 of the columnar member 72a of the handle support portion 72, the lead grooves 75 slide while being guided by the distal end parts 76d of the protrusion parts 76b through rotation of the first pushing portion 78a and the second pushing portion 78b. In addition, through rotation of the first pushing portion 78a and the second pushing portion 78b, when the distal end parts 76d of the protrusion parts 76b have reached the respective ends by sliding of the lead grooves 75, the distal end parts 76d of the protrusion parts 76b are restricted from further sliding in the same direction, also by the stopper slits 74. Then, while the lead grooves 75 are guided by the distal end parts 76d of the protrusion parts 76b, the reciprocating members 78 move up and down alternately. Thus, the first pushing portion 78a and the second pushing portion 78b move up and down.

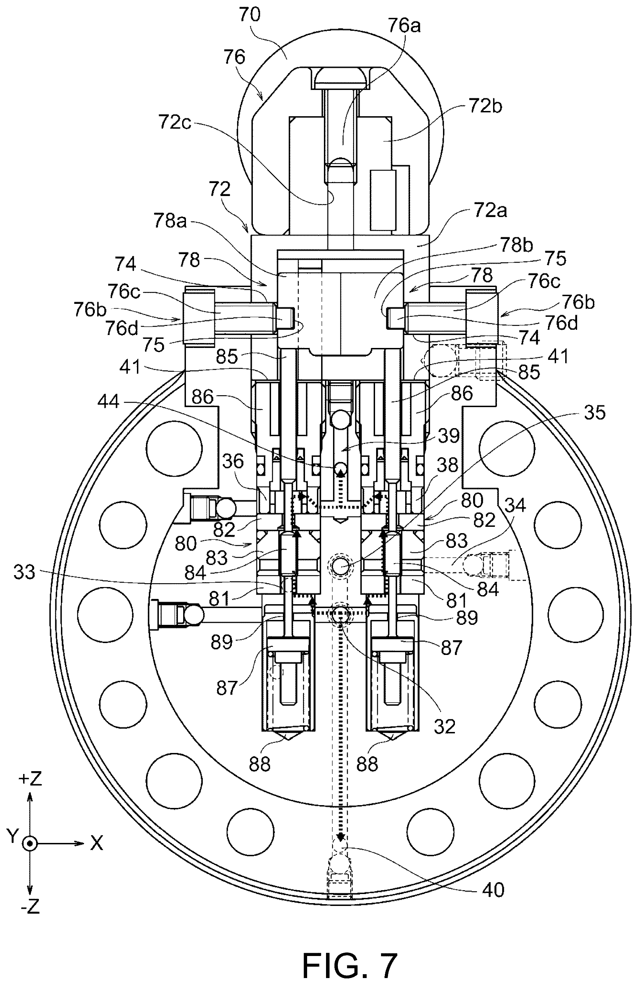

Thus, when the phase adjustment member 76 rotates in synchronization with the operation handle 70, the reciprocating members 78 move in the up-down direction in FIG. 6 to FIG. 8. Specifically, when the operation handle 70 is at the initial position, the reciprocating members 78 are at the neutral position as shown in FIG. 7. At this time, the protrusion parts 76b are located at the center parts of the lead grooves 75 and the stopper slits 74, so that the heights of the reciprocating members 78 in the up-down direction in FIG. 7 become the same.

On the other hand, when a worker holds the operation handle 70 by a hand and rotates the operation handle 70 rightward, the phase adjustment member 76 rotates clockwise in FIG. 6 to FIG. 8. Thus, as shown in FIG. 6, the first pushing portion 78a guided by the protrusion part 76b on the left side, of the two protrusion parts 76b, slides and ascends, and the second pushing portion 78b guided by the protrusion part 76b on the right side slides and descends. In this case, while being pushed by the protrusion parts 76b, the reciprocating member 78 on the left side in FIG. 6 ascends from the neutral position, and the reciprocating member 78 on the right side descends from the neutral position. Such positions of the reciprocating members 78 are defined as an advancing position.

When a worker holds the operation handle 70 by a hand and rotates the operation handle 70 leftward, the phase adjustment member 76 rotates counterclockwise in FIG. 6 to FIG. 8. Thus, as shown in FIG. 8, the first pushing portion 78a guided by the protrusion part 76b on the left side, of the two protrusion parts 76b, slides and descends, and the second pushing portion 78b guided by the protrusion part 76b on the right side slides and ascends. In this case, while being pushed by the protrusion parts 76b, the reciprocating member 78 on the left side in FIG. 8 descends from the neutral position and the reciprocating member 78 on the right side ascends from the neutral position. Such positions of the reciprocating members 78 are defined as a receding position.

As described above, the two protrusion parts 76b (fixation members) convert a rotational motion of the actuation part to advancing/receding motions of the first pushing portion 78a and the second pushing portion 78b.

As shown in FIG. 2 and FIG. 3, the cutting portion 50 includes a body portion 56 having an internal space in which pressure oil is stored. In addition, a partition member 54 for partitioning the internal space formed inside the body portion 56 into two regions is provided inside the body portion 56. An end of the piston member 52 is connected to the partition member 54. Of the two regions partitioned by the partition member 54 in the internal space in which pressure oil is stored, the region on the right side of the partition member 54 in FIG. 2 is an advancing oil chamber, and the region on the left side of the partition member 54 in FIG. 2 is a receding oil chamber 58. In FIG. 2, the volume of the advancing oil chamber is 0, but when the partition member 54 moves leftward in FIG. 2, the advancing oil chamber is formed between the body portion 56 and the partition member 54. Then, when pressure oil is sent from the pressure oil supply mechanism 30 to the advancing oil chamber, the partition member 54 is pushed by pressure oil, so that the partition member 54 moves leftward in FIG. 2 and the piston member 52 also moves leftward in FIG. 2.

On the other hand, when pressure oil is sent from the pressure oil supply mechanism 30 to the receding oil chamber 58, the partition member 54 is pushed by pressure oil, so that the partition member 54 moves rightward in FIG. 2 and the piston member 52 also moves rightward in FIG. 2. An accommodation space in which a bar-shaped member 51 is accommodated is formed inside the piston member 52. A passage 51a for pressure oil is formed inside the bar-shaped member 51. When pressure oil is sent from the pressure oil supply mechanism 30 described later to the passage 51a of the bar-shaped member 51, the pressure oil is sent to the receding oil chamber 58.

As shown in FIG. 1 to FIG. 3 and FIG. 6 to FIG. 8, in the pressure oil supply mechanism 30, a plurality of oil passages 32, 33, 34, 35, 36, 37, 38, 39, and 40 for sending pressure oil from the oil chamber 28 to the cutting portion 50 and returning return oil from the cutting portion 50 to the oil chamber 28, are provided. In addition, the pressure oil supply mechanism 30 includes the two passage adjustment valves 80. By the two passage adjustment valves 80, which passages the pressure oil sent from the oil chamber 28 to the cutting portion 50 or the return oil returned from the cutting portion 50 to the oil chamber 28 passes through is adjusted. The two passage adjustment valves 80 are operated by the operation handle 70. Specifically, each passage adjustment valve 80 is operated by each reciprocating member 78 moving up/down.

In the pressure oil supply mechanism 30, the first oil passage 32 communicates with the oil chamber 28, and the second oil passage 33 communicates with the first oil passage 32. A first seal plate 81 (described later) of the passage adjustment valve 80 on the left side is provided between the first oil passage 32 and the second oil passage 33. The fourth oil passage 35 communicates with the third oil passage 34. The sixth oil passage 37 communicates with the advancing oil chamber present in the region on the right side of the partition member 54 in FIG. 2 in the internal space formed inside the body portion 56. The fifth oil passage 36 is provided in the vicinity of a spool 86 (described later) of the passage adjustment valve 80 on the left side. The seventh oil passage 38 is provided in the vicinity of a spool 86 of the passage adjustment valve 80 on the right side. The seventh oil passage 38 communicates with the third oil passage 34 via a second seal plate 82 of the passage adjustment valve 80 on the right side.

The first oil passage 32 communicates with the passage 51a of the bar-shaped member 51. Here, a first seal plate 81 (described later) of the passage adjustment valve 80 on the right side is provided between the first oil passage 32 and the third oil passage 34. The seventh oil passage 38 is provided in the vicinity of the spool 86 (described later) of the passage adjustment valve 80 on the right side. A drain pipe 44 for returning pressure oil to the oil chamber 28 is provided. The drain pipe 44 communicates with the eighth oil passage 39. The eighth oil passage 39 communicates with the fifth oil passage 36 and the seventh oil passage 38.

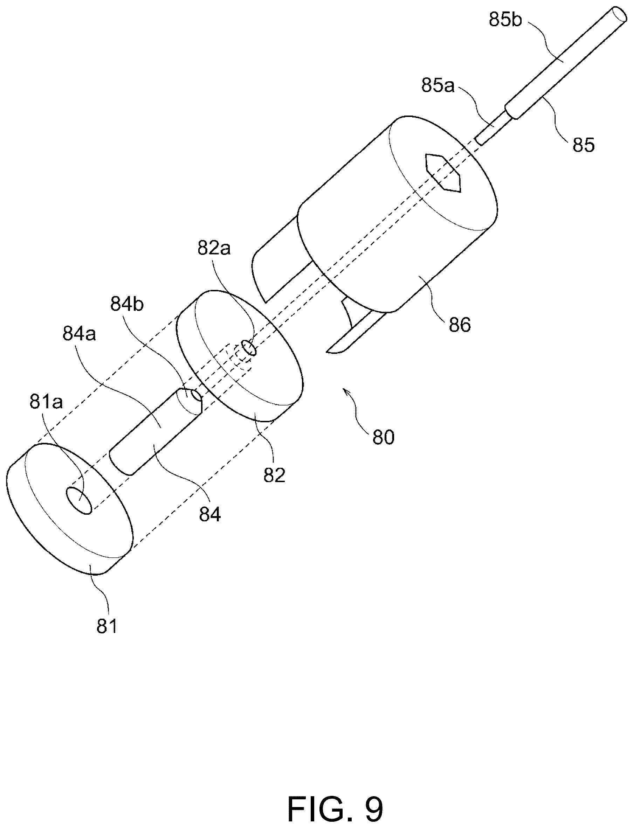

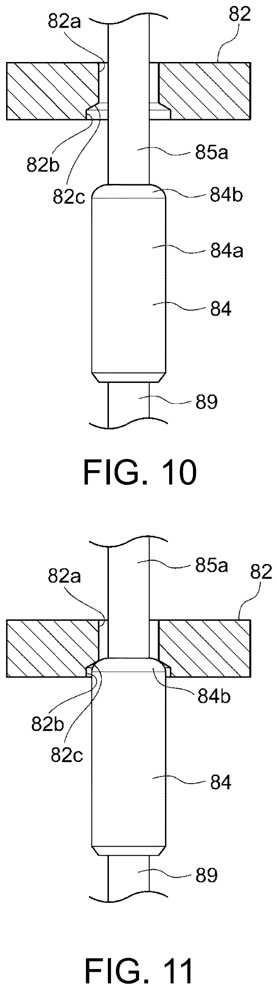

Next, the details of the structure of each passage adjustment valve 80 will be described with reference to FIG. 6 to FIG. 11. As shown in FIG. 6 to FIG. 11, each passage adjustment valve 80 includes the first seal plate 81, the second seal plate 82, a valve seat 83 provided between the first seal plate 81 and the second seal plate 82, a seal pin 84 (seal member) provided inside the valve seat 83, an actuation pin 85 attached to the seal pin 84, and the spool 86 inside which the actuation pin 85 passes. The spool 86 is inserted into the cutting portion 50 from an insertion hole 41 formed in the cutting portion 50. Ends of the two spools 86 are located so as to be opposed to ends of the first pushing portion 78a and the second pushing portion 78b. The ends of the first pushing portion 78a and the second pushing portion 78b are pressed against or separated from the ends of the actuation pins 85, whereby advancing/receding motions can be performed. In the exploded perspective view in FIG. 9, the valve seat 83 is not shown, so that the seal pin 84 can be easily seen. More specifically, as shown in FIG. 10 and FIG. 11, the seal pin 84 has a columnar-shaped part 84a and a spherical end surface 84b provided at one end of the columnar-shaped part 84a (specifically, an end on the second seal plate 82 side). The actuation pin 85 has a first columnar-shaped part 85a and a second columnar-shaped part 85b having a greater diameter than the first columnar-shaped part 85a, and a distal end of the first columnar-shaped part 85a is attached to the spherical end surface 84b of the seal pin 84.

The first seal plate 81 has a through hole 81a with a uniform diameter. The diameter of the through hole 81a is substantially the same as the diameter of the columnar-shaped part 84a of the seal pin 84. Therefore, when the columnar-shaped part 84a of the seal pin 84 is inserted into the through hole 81a of the first seal plate 81, the through hole 81a of the first seal plate 81 is sealed by the seal pin 84.

As shown in FIG. 10 and FIG. 11, the second seal plate 82 has a through hole formed of a first through hole 82a and a second through hole 82b. Here, the diameter of the second through hole 82b is greater than the diameter of the first through hole 82a. The diameter of the first through hole 82a is smaller than the diameter of the columnar-shaped part 84a of the seal pin 84. On the other hand, the diameter of the second through hole 82b is greater than the diameter of the columnar-shaped part 84a of the seal pin 84. The diameter of the first through hole 82a is greater than the diameter of the first columnar-shaped part 85a of the actuation pin 85. In the through hole of the second seal plate 82, a slope surface 82c is formed between the first through hole 82a and the second through hole 82b. When the seal pin 84 is pushed and moved toward the second seal plate 82, as shown in FIG. 11, the spherical end surface 84b of the seal pin 84 comes into contact with the slope surface 82c of the second seal plate 82, so that the through hole of the second seal plate 82 is closed by the seal pin 84.

As shown in FIG. 6 to FIG. 8, the first seal plate 81 is attached to one end surface of the valve seat 83. The second seal plate 82 is attached to another end surface of the valve seat 83. The valve seat 83 has a through hole, and the seal pin 84 moves up/down inside the through hole. The diameter of the through hole of the valve seat 83 is greater than the diameter of the columnar-shaped part 84a of the seal pin 84. Therefore, pressure oil can pass through a gap between the outer circumferential surface of the through hole of the valve seat 83 and the outer circumferential surface of the columnar-shaped part 84a of the seal pin 84.

The spool 86 is attached to a surface of the second seal plate 82 on the side opposite to a surface to which the valve seat 83 is attached. The spool 86 has a through hole, and the actuation pin 85 moves up/down inside the through hole. The diameter of the through hole of the spool 86 is substantially the same as the diameter of the second columnar-shaped part 85b of the actuation pin 85. Therefore, the through hole of the spool 86 is sealed by the actuation pin 85.

As shown in FIG. 6 to FIG. 8, in each passage adjustment valve 80, one end of the connection part 89 is connected to a lower end surface of the columnar-shaped part 84a of the seal pin 84, and a seal plate 87 is attached to the other end of the connection part 89. A spring 88 is provided in a compressed state under the seal plate 87. Thus, the seal plate 87 is pushed and moved in the upward direction shown in FIG. 6 to FIG. 8, by a force of the compressed spring 88 to return to its original state.

As shown in FIG. 7, when the reciprocating members 78 are located at the neutral position, upper ends of the second columnar-shaped parts 85b of the actuation pins 85 are in contact with the first pushing portion 78a and the second pushing portion 78b of the reciprocating members 78. Specifically, by a force of the compressed spring 88 to return to its original state, the seal plate 87 is pushed and moved in the upward direction shown in FIG. 6 to FIG. 8, whereby the actuation pin 85 and the seal pin 84 connected to the seal plate 87 via the connection part 89 are also pushed and moved in the upward direction shown in FIG. 6 to FIG. 8. However, when the upper end of the second columnar-shaped part 85b of the actuation pin 85 comes into contact with the first pushing portion 78a or the second pushing portion 78b of each reciprocating member 78, the seal pin 84 and the actuation pin 85 do not move upward any longer, and therefore the seal pin 84 is accommodated in the through hole of the valve seat 83. In this state, the first seal plate 81 and the second seal plate 82 are not sealed by the seal pin 84.

On the other hand, as shown in FIG. 6, when each reciprocating member 78 moves to the advancing position, the reciprocating member 78 on the left side ascends, so that the first pushing portion 78a of the reciprocating member 78 is separated upward from the second columnar-shaped part 85b of the actuation pin 85 on the left side. In this case, by a force of the compressed spring 88 to return to its original state, the seal plate 87 is pushed and moved in the upward direction shown in FIG. 6 to FIG. 8, whereby the actuation pin 85 and the seal pin 84 connected to the seal plate 87 via the connection part 89 are also pushed and moved in the upward direction shown in FIG. 6 to FIG. 8. In this case, in the passage adjustment valve 80 on the left side, the through hole of the second seal plate 82 is sealed by the seal pin 84. In this state, in the passage adjustment valve 80 on the left side, the first seal plate 81 is not sealed by the seal pin 84. When each reciprocating member 78 moves to the advancing position, the reciprocating member 78 on the right side descends, so that the second pushing portion 78b of the reciprocating member 78 pushes and moves the second columnar-shaped part 85b of the actuation pin 85 on the right side, downward. Thus, in the passage adjustment valve 80 on the right side, the columnar-shaped part 84a of the seal pin 84 is inserted into the through hole 81a of the first seal plate 81, so that the through hole 81a of the first seal plate 81 is sealed by the seal pin 84. In this state, in the passage adjustment valve 80 on the right side, the second seal plate 82 is not sealed by the seal pin 84.

As shown in FIG. 8, when each reciprocating member 78 moves to the receding position, the reciprocating member 78 on the left side descends, so that the first pushing portion 78a of the reciprocating member 78 pushes and moves the second columnar-shaped part 85b of the actuation pin 85 on the left side, downward. Thus, in the passage adjustment valve 80 on the left side, the columnar-shaped part 84a of the seal pin 84 is inserted into the through hole 81a of the first seal plate 81, so that the through hole 81a of the first seal plate 81 is sealed by the seal pin 84. In this state, in the passage adjustment valve 80 on the left side, the second seal plate 82 is not sealed by the seal pin 84. When each reciprocating member 78 moves to the receding position, the reciprocating member 78 on the right side ascends, so that the second pushing portion 78b of the reciprocating member 78 is separated upward from the second columnar-shaped part 85b of the actuation pin 85 on the right side. In this case, by a force of the compressed spring 88 to return to its original state, the seal plate 87 is pushed and moved in the upward direction shown in FIG. 6 to FIG. 8, whereby the actuation pin 85 and the seal pin 84 connected to the seal plate 87 via the connection part 89 are also pushed and moved in the upward direction shown in FIG. 6 to FIG. 8. In this case, in the passage adjustment valve 80 on the right side, the through hole of the second seal plate 82 is sealed by the seal pin 84. In this state, in the passage adjustment valve 80 on the right side, the first seal plate 81 is not sealed by the seal pin 84.

Next, operation of the cutting device 10 configured as described above will be described below. First, operation in a case of cutting a round bar such as a reinforcement bar by the cutting portion 50 will be described. In the case of cutting a round bar such as a reinforcement bar by the cutting portion 50, power is supplied from the battery 22 to the motor 20, thereby driving the motor 20. Then, when the rotary shaft 24 is rotated by the motor 20, the eccentric member 25 and the bearing perform an eccentric rotational motion with respect to the axis of the rotary shaft 24, so that the piston 26 moves up and down and pressure oil is sent from the oil chamber 28 to the pressure oil supply mechanism 30. As described later, when the motor 20 is merely driven, pressure oil is just returned from the pressure oil supply mechanism 30 to the oil chamber 28 and is not sent to the receding oil chamber 58.

Next, when a worker holds the operation handle 70 by a hand and rotates the operation handle 70 rightward, the phase adjustment member 76 rotates clockwise in FIG. 6 to FIG. 8. Thus, as shown in FIG. 6, the first pushing portion 78a guided by the protrusion part 76b on the left side, of the two protrusion parts 76b, slides and ascends, and the second pushing portion 78b guided by the protrusion part 76b on the right side slides and descends. Thus, each reciprocating member 78 moves to the advancing position as shown in FIG. 6. As described above, when each reciprocating member 78 is located at the advancing position, the through hole of the second seal plate 82 is sealed by the seal pin 84 in the passage adjustment valve 80 on the left side. In this state, in the passage adjustment valve 80 on the left side, the first seal plate 81 is not sealed by the seal pin 84. In the passage adjustment valve 80 on the right side, the through hole 81a of the first seal plate 81 is sealed by the seal pin 84. In this state, in the passage adjustment valve 80 on the right side, the second seal plate 82 is not sealed by the seal pin 84.

When each reciprocating member 78 is located at the advancing position, pressure oil sent from the oil chamber 28 to the pressure oil supply mechanism 30 is sent from the first oil passage 32 through the through hole 81a of the first seal plate 81 of the passage adjustment valve 80 on the left side to the second oil passage 33. At this time, since the through hole of the second seal plate 82 is sealed by the seal pin 84 in the passage adjustment valve 80 on the left side, pressure oil is not sent from the second oil passage 33 to the fifth oil passage 36. Then, pressure oil is sent from the second oil passage 33 to the advancing oil chamber. Thus, pressure oil is sent from the second oil passage 33 to the advancing oil chamber, and the partition member 54 is pushed and moved leftward in FIG. 2. In this way, the piston member 52 connected to the partition member 54 is pushed out to the left side in FIG. 1 and FIG. 2. Thus, the cutting members 64 and 66 of the cutting portion 50 rotate about the shaft 68 in the arrow directions in FIG. 2. In this way, since the cutting members 64 and 66 rotate about the shaft 68 in directions to come close to each other, a round bar such as a reinforcement bar clamped between the cutting members 64 and 66 is cut.

When the partition member 54 is pushed and moved leftward in FIG. 2, return oil is sent from the receding oil chamber 58 to the passage 51a of the bar-shaped member 51, and the return oil is sent from the passage 51a to the fourth oil passage 35. Then, return oil is sent from the fourth oil passage 35 to the eighth oil passage 39. As described above, since the second seal plate 82 is not sealed by the seal pin 84 in the passage adjustment valve 80 on the right side, return oil is sent from the fourth oil passage 35 through the through hole of the second seal plate 82 to the eighth oil passage 39. Then, return oil is sent to the drain pipe 44 through the eighth oil passage 39. In this way, return oil is returned from the drain pipe 44 to the oil chamber 28. In the passage adjustment valve 80 on the right side, since the through hole 81a of the first seal plate 81 is sealed by the seal pin 84, return oil is not sent from the fourth oil passage 35 to the third oil passage 34.

When each reciprocating member 78 is located at the neutral position, pressure oil sent from the oil chamber 28 to the pressure oil supply mechanism 30 is sent from the first oil passage 32 through the through hole 81a of the first seal plate 81 in the passage adjustment valve 80 on the left side to the second oil passage 33. At this time, pressure oil that has not entered the second oil passage 33 passes through the gap between the outer circumferential surface of the through hole of the valve seat 83 and the opposed circumferential surface of the seal pin 84, so as to be sent to the drain pipe 44. At the same time, pressure oil sent from the oil chamber 28 to the pressure oil supply mechanism 30 is sent from the first oil passage 32 through the through hole 81a of the first seal plate 81 of the passage adjustment valve 80 on the right side to the drain pipe 44. In this way, pressure oil is returned from the drain pipe 44 to the oil chamber 28. In addition, pressure oil sent from the oil chamber 28 to the pressure oil supply mechanism 30 is sent from the first oil passage 32 to the ninth oil passage 40 present on the lower side. Then, pressure oil is sent from the ninth oil passage 40 to the drain pipe 44. In this way, pressure oil is returned from the drain pipe 44 to the oil chamber 28. As described above, when each reciprocating member 78 is located at the neutral position, pressure oil sent from the oil chamber 28 to the pressure oil supply mechanism 30 is returned through the drain pipe 44 to the oil chamber 28. Therefore, pressure oil is sent to neither the advancing oil chamber nor the receding oil chamber 58, so that the piston member 52 does not move any longer. Thus, operation of the cutting portion 50 is stopped.

In a case where, after a round bar such as a reinforcement bar is cut by the cutting portion 50, the cutting portion 50 is returned to a state in which the cutting members 64 and 66 are opened as shown in FIG. 1, a worker holds the operation handle 70 by a hand and rotates the operation handle 70 leftward. Thus, the phase adjustment member 76 rotates counterclockwise in FIG. 6 to FIG. 8, so that the second pushing portion 78b guided by the protrusion part 76b on the right side, of the two protrusion parts 76b, slides and ascends, and the first pushing portion 78a guided by the protrusion part 76b on the left side descends, as shown in FIG. 8. Thus, each reciprocating member 78 moves to the receding position as shown in FIG. 8. As described above, when each reciprocating member 78 is located at the receding position, the through hole 81a of the first seal plate 81 is sealed by the seal pin 84 in the passage adjustment valve 80 on the left side. In this state, in the passage adjustment valve 80 on the left side, the second seal plate 82 is not sealed by the seal pin 84. In the passage adjustment valve 80 on the right side, the through hole of the second seal plate 82 is sealed by the seal pin 84. In this state, in the passage adjustment valve 80 on the right side, the first seal plate 81 is not sealed by the seal pin 84.

When each reciprocating member 78 is located at the receding position, pressure oil sent from the oil chamber 28 to the pressure oil supply mechanism 30 is sent from the first oil passage 32 to the fourth oil passage 35 through the through hole 81a of the first seal plate 81 of the passage adjustment valve 80 on the right side. Then, pressure oil is sent from the fourth oil passage 35 to the ninth oil passage 40. Thus, pressure oil is sent to the receding oil chamber 58, so that the partition member 54 is pushed and moved rightward in FIG. 2. At this time, since the through hole of the second seal plate 82 is sealed by the seal pin 84 in the passage adjustment valve 80 on the right side, pressure oil is not sent from the fourth oil passage 35 to the third oil passage 34. In this way, the piston member 52 connected to the partition member 54 is returned to the right side in FIG. 1 and FIG. 2. Thus, the cutting members 64 and 66 of the cutting portion 50 rotate about the shaft 68 in directions to be separated from each other. In this way, the cutting portion 50 returns to a state in which the cutting members 64 and 66 are opened as shown in FIG. 1.

When the partition member 54 is pushed and moved rightward in FIG. 2, return oil is sent from the advancing oil chamber to the second oil passage 33, and the return oil is sent to the drain pipe 44 through the fifth oil passage 36. In this way, return oil is returned from the drain pipe 44 to the oil chamber 28.

The cutting device 10 (hydraulic actuation device) according to the present embodiment configured as described above includes: a hydraulic pump configured to generate pressure oil; a tool (specifically, the cutting portion 50) configured to be actuated by the pressure oil generated by the hydraulic pump; an oil passage through which the pressure oil generated by the hydraulic pump is sent to the tool and return oil is returned from the tool to the hydraulic pump; and a switchover portion (specifically, the operation handle 70, the handle support portion 72, and the phase adjustment member 76) provided to the oil passage and configured to switch a path for at least one of the pressure oil and the return oil. The switchover portion includes an actuation part (specifically, the handle support portion 72), and a first shaft part (specifically, the first pushing portion 78a) and a second shaft part (specifically, the second pushing portion 78b) configured to advance/recede when the actuation part is rotated. When the actuation part is rotated, the first shaft part and the second shaft part alternately advance/recede in a direction perpendicular to a direction in which the actuation part is rotated, whereby the path in the oil passage is switched. The cutting device 10 as described above can switch the path in the oil passage merely by actuating the first shaft part and the second shaft part alternately in the up-down direction perpendicular to the rotation direction of the change lever. For example, merely by a worker rotating the operation handle 70 leftward or rightward, one set of valves can be easily switched. Then, the tool can be made compact. This leads to weight reduction of the cutting device 10, whereby operability of the cutting device 10 can also be improved.

The cutting device 10 according to the present embodiment may include, as described above, a conversion member (specifically, the two protrusion parts 76b (fixation members)) configured to convert a rotational motion of the actuation part to advancing/receding motions of the first shaft part and the second shaft part. In this case, the first pushing portion 78a and the second pushing portion 78b can be moved up/down without the need of special components other than the conversion member. Thus, increase in the mass and the cost of the cutting device 10 can be avoided.

In the cutting device 10 according to the present embodiment, as described above, the actuation part, the conversion member, and the phase adjustment member 76 may be configured to rotate in the same phase, outer circumferential surfaces of the first shaft part and the second shaft part may have grooves (specifically, the lead grooves 75) each extending in a direction inclined relative to an advancing/receding direction and a circumferential direction of the first shaft part and the second shaft part, and fixation members provided in a position fixed state may be respectively inserted into the grooves. In this case, it is possible to guide the fixation members in the lead groove 75 only by the actuation part, the conversion member, and the phase adjustment member 76 rotating.

In the cutting device 10 according to the present embodiment, as described above, the first shaft part and the second shaft part of the switchover portion may be provided with seal members (specifically, the seal pins 84) extending along the circumferential direction of the first shaft part and the second shaft part, and when the first shaft part and the second shaft part advance/recede by the actuation part being rotated, positions of the seal members may be changed, whereby the path in the oil passage may be switched. In this case, since the path in the oil passage is switched by the seal members sliding along the axis directions of the spools 86, it is possible to switch the path in the oil passage without applying a great pressure to the spools 86 of the switchover portion by pressure oil or the like.

In the cutting device 10 according to the present embodiment, as described above, a body part of the cutting device 10 may have the insertion hole 41 into which a shaft part of the switchover portion is inserted, an oil passage extending along a circumferential direction of the insertion hole 41 may be provided to a peripheral wall of the insertion hole 41, and when the shaft part advances/recedes by the actuation part being rotated, the oil passage closed by the shaft part may be opened or the oil passage may be closed by the shaft part, whereby the path in the oil passage may be switched. In this case, since a groove formed in the peripheral wall of the insertion hole 41 can be opened or closed only by the spools 86 sliding in the axis direction, it is possible to switch the path in the oil passage without applying a great pressure to the spools 86 of the switchover portion by pressure oil or the like.

The hydraulic actuation device according to the present disclosure is not limited to the above configurations and may be modified in various manners.

For example, the tool to be operated by the actuation portion 21 is not limited to the cutting portion 50. As the tool, for example, a spreader or the like for forcibly opening a gap of a target such as a door may be used.

The shapes of the reciprocating members 78 are not particularly limited as long as the reciprocating members 78 can move up/down alternately and provide the functions as the reciprocating members 78.

## Claims

1. A hydraulic actuation device comprising:
a hydraulic pump configured to generate pressure oil;
a tool configured to be actuated by the pressure oil generated by the hydraulic pump;
an oil passage through which the pressure oil generated by the hydraulic pump is sent to the tool and return oil is returned from the tool to the hydraulic pump; and
a switchover portion provided to the oil passage and configured to switch a path for at least one of the pressure oil and the return oil, wherein
the switchover portion includes an actuation part, and a first shaft part and a second shaft part configured to advance/recede when the actuation part is rotated, and
when the actuation part is rotated, the first shaft part and the second shaft part alternately advance/recede in a direction perpendicular to a direction in which the actuation part is rotated, whereby the path in the oil passage is switched.

2. The hydraulic actuation device according to claim 1, wherein
the switchover portion further includes a conversion member configured to convert a rotational motion of the actuation part to advancing/receding motions of the first shaft part and the second shaft part.

3. The hydraulic actuation device according to claim 2, wherein
the actuation part, the conversion member, and a phase adjustment member are configured to rotate in the same phase,
outer circumferential surfaces of the first shaft part and the second shaft part have grooves each extending in a direction inclined relative to an advancing/receding direction and a circumferential direction of the first shaft part and the second shaft part, and
fixation members provided in a position fixed state are respectively inserted into the grooves.

4. The hydraulic actuation device according to any one of claims 1 to 3, wherein
the first shaft part and the second shaft part of the switchover portion are provided with seal members extending along the circumferential direction of the first shaft part and the second shaft part, and
when the first shaft part and the second shaft part advance/recede by the actuation part being rotated, positions of the seal members are changed, whereby the path in the oil passage is switched.

5. The hydraulic actuation device according to claim 4, wherein
a body part of the hydraulic actuation device has an insertion hole into which a shaft part of the switchover portion is inserted,
an oil passage extending along a circumferential direction of the insertion hole is provided to a peripheral wall of the insertion hole, and
when the shaft part advances/recedes by the actuation part being rotated, the oil passage closed by the shaft part is opened or the oil passage is closed by the shaft part, whereby the path in the oil passage is switched.

6. The hydraulic actuation device according to any one of claims 1 to 3, wherein
a body part of the hydraulic actuation device has an insertion hole into which a shaft part of the switchover portion is inserted,
an oil passage extending along a circumferential direction of the insertion hole is provided to a peripheral wall of the insertion hole, and
when the shaft part advances/recedes by the actuation part being rotated, the oil passage closed by the shaft part is opened or the oil passage is closed by the shaft part, whereby the path in the oil passage is switched.
